# NOUVEAU FASCICULE DE BREVET EUROPEEN

(11) **EP 2 202 553 B3**
(45) Date de publication du présent fascicule: **27.06.2018**
(45) Mention de la délivrance du brevet: 19.08.2015
(21) Numéro de dépôt: 09178813.3
(22) Date de dépôt: 11.12.2009
(51) Int. Cl.: G02B 7/182, B64G 1/10, G02B 23/02, G02B 7/183

(54) **Télescope spatial de haute stabilité et à faible inertie**
Weltraumteleskop mit hoher Stabilität und mit niedriger Trägheit
Space telescope with very high stability and with a low inertia

(30) Priorité: 12.12.2008 FR 0807006
(43) Date de publication de la demande: 30.06.2010
(73) Titulaire: Thales, 92200 Neuilly Sur Seine (FR)
(72) Inventeur: Lasic, Thierry, 06210 Mandelieu (FR); Douillet, Francis, 06550 La Roquette sur Siagne (FR); Boban, David, 06550 La Roquette sur Siagne (FR); Fer, Yann, 06210 Mandelieu (FR)
(74) Mandataire: Esselin, Sophie

(56) Documents cités:
- WO-A1-93/09068
- US-A- 5 760 979
- US-A1- 2006 018 012

## Description

La présente invention porte sur un engin spatial d'observation.

Les engins spatiaux de type satellites d'observation de haute résolution dans un domaine de longueurs d'onde visibles, sont équipés de miroirs embarqués de grande dimensions pouvant typiquement être des structures d'envergure supérieure à un mètre et d'épaisseur de l'ordre de quelques centimètres. Ces engins spatiaux et leurs éléments subissent de fortes variations de températures lors du fonctionnement opérationnel en orbite, et de très fortes contraintes mécaniques los de la phase de lancement depuis le sol jusqu'à leur station dans l'espace.

De tels engins spatiaux ont une agilité ou maniabilité limitée, notamment due aux importantes inerties de tangage et de roulis.

Une telle réalisation entraine de fortes instabilités en termes de tilt du miroir secondaire ainsi qu'une obturation importante liée à la nécessité d'avoir une structure du tripode suffisamment rigide pour supporter les environnements dynamiques lors du lancement.

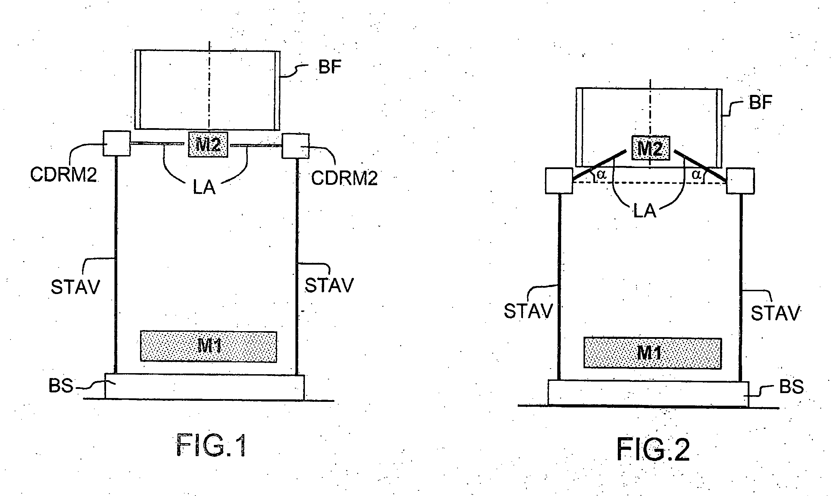

Tel qu'illustré sur la figure 1, en vue de coupe, un satellite d'observation de haute résolution dans un domaine de longueurs d'onde visibles comprend un miroir primaire M1 et un miroir secondaire M2. Le satellite d'observation, ou télescope, comprend également une base de support BS, une structure avant STAV, un cadre de support CDRM2 dédié au miroir secondaire M2, et un baffle d'entrée BF pour éviter les entrées solaires dans le télescope. Une pluralité de lames de support LA classiquement nommées lames araignée, relient le cadre CDRM2 du miroir secondaire M2 et le miroir secondaire M2, les lames de support LA étant dans le plan du cadre de support CDRM2 du miroir secondaire M2, lui-même dans le plan du miroir secondaire M2. La publication US 2006/018012 A1 décrit un engin d'observation pertinent.

Un but de l'invention est de limiter les inerties d'un tel engin spatial, de manière à augmenter l'agilité de l'engin spatial, sans réduire la stabilité de l'engin spatial pour que celle-ci reste compatible avec la qualité d'image nécessaire.

Il est proposé, selon un aspect de l'invention, un engin spatial d'observation comprenant un miroir primaire, un miroir secondaire, un baffle d'entrée, une base de support, et un ensemble de support dudit miroir secondaire, ledit ensemble de support comprenant un cadre de support dédié au miroir secondaire et compris dans un plan sensiblement parallèle au plan du miroir secondaire, et étant muni d'une pluralité de lames de support reliant le cadre de support du miroir secondaire et le miroir secondaire, caractérisé en ce que les lames de support sont inclinées par rapport au plan du cadre de support du miroir secondaire, et au moins une partie du miroir secondaire est disposée à l'intérieur du baffle d'entrée.

Ainsi, pour une configuration identique, un satellite d'observation intégrant l'invention peut être réalisé de façon que le cadre de support dédié au miroir secondaire soit plus proche de la base de support, ce qui implique une diminution de l'inertie du satellite. Aussi, le cadre de support dédié au miroir secondaire étant plus proche de la base de support, l'inertie du satellite est diminuée, et le baffle d'entrée peut être rapproché du miroir primaire, ce qui améliore encore le gain en inertie de l'engin spatial d'observation.

Selon un mode de réalisation, ladite inclinaison des lames de support reliant le cadre du miroir secondaire et le miroir secondaire est comprise entre 5° et 45°.

De telles valeurs permettent d'avoir un gain significatif en inertie (inclinaison supérieure ou égale à environ 5°), tout en évitant une instabilité du miroir secondaire et un risque d'obturation (inclinaison inférieure ou égale à environ 45°).

Dans un mode de réalisation, ladite- inclinaison des lames de support reliant le cadre du miroir secondaire et le miroir secondaire est comprise entre 10° et 20°, et par exemple sensiblement égale à 16°.

Un tel mode de réalisation correspond à une optimisation du compromis entre gain en inertie de l'engin spatial d'observation, et la stabilité optique du miroir secondaire.

Lesdites lames de support peuvent comprendre du plastique à renfort fibre de carbone ou un matériau céramique insensible à l'environnement hydrique et quasiment insensible aux fluctuations thermiques.

Par exemple, ledit matériau céramique comprend du Nitrure de Silicium.

On limite ainsi le tilt du miroir secondaire pouvant être généré par l'inclinaison des lames d'araignée.

L'invention sera mieux comprise à l'étude de quelques modes de réalisation décrits à titre d'exemples nullement limitatifs et illustrés par les dessins annexés sur lesquels :
- la figure 1 illustre un satellite d'observation de l'état de la technique ; et
- la figure 2 illustre un satellite d'observation, comprenant selon un aspect de l'invention.

Sur l'ensemble de figures, les éléments ayants les mêmes références sont similaires.

Tel qu'illustré sur la figure 2, en vue de coupe, un satellite d'observation de haute résolution dans un domaine de longueurs d'onde visibles comprend un miroir primaire M1 et un miroir secondaire M2. Le satellite comprend également une base de support BS, une structure avant STAV, un cadre de support CDRM2 dédié au miroir secondaire M2, et un baffle d'entrée BF. Une pluralité de lames de support LA ou lames araignée, relient le cadre CDRM2 du miroir secondaire M2 et le miroir secondaire M2, les lames de support LA étant inclinées par rapport au plan du cadre de support CDRM2 du miroir secondaire M2, le plan du miroir secondaire M2 et le plan de son cadre de support dédié CDRM2 étant sensiblement parallèles. Considérant la base de support et le miroir primaire M1 comme le bas du satellite d'observation, l'ensemble de support selon l'invention est monté fixement de sorte que les miroirs primaire M1 et secondaire M2 sont situés de part et d'autre du plan du cadre de support CDRM2 du miroir secondaire M2.

L'inclinaison α des lames de support LA par rapport au plan du cadre de support CDRM2 du miroir secondaire M2 est comprise entre 5° et 45°. Ainsi, on peut avoir un gain significatif en inertie car l'inclinaison α est supérieure ou égale à environ 5°, tout en évitant une instabilité du miroir secondaire et un risque d'obturation, car l'inclinaison α est inférieure ou égale à environ 45°.

Par exemple, l'inclinaison α des lames araignée LA peut être sensiblement égale à 16°, ce qui correspond à une optimisation du compromis entre gain en inertie de l'engin spatial d'observation, et la stabilité optique du miroir secondaire M2. De manière un peu plus générale, une bonne optimisation correspond à une inclinaison α des lames araignée LA sensiblement comprise entre 10° et 20°.

Le cadre de support CDRM2 dédié au miroir secondaire M2 est plus proche de la base de support BS, ce qui implique une diminution de l'inertie du satellite, et le baffle d'entrée BF peut être rapproché du miroir primaire M1, ce qui améliore encore le gain en inertie du satellite d'observation.

Par exemple, pour un rapprochement du cadre de support CDRM2 de 15% de la base de support BS, un gain de l'ordre de 8% peut être gagné en inertie pour le satellite, par rapport à une structure en tripode pyramidal classique.

Les lames de support LA peuvent comprendre du plastique à renfort fibre de carbone ou un matériau céramique insensible à l'environnement hydrique et peu sensible aux variations thermiques. Le matériau céramique peut, par exemple, comprendre du Nitrure de Silicium. On limite ainsi le tilt pouvant être généré par l'inclinaison α des lames d'araignée, par exemple de l'ordre de 4µrad.

Aussi la conception d'un tel ensemble de support de miroir secondaire pour engin spatial d'observation, permet de diminuer de manière significative l'inertie de l'engin spatial, tout en évitant de réduire la stabilité de l'engin spatial pour que celle-ci reste compatible avec la qualité d'image nécessaire pour une observation dans un domaine de longueurs d'onde visibles.

## Revendications

1. Engin spatial d'observation comprenant un miroir primaire (M1), un miroir secondaire (M2), un baffle d'entrée (BF), une base de support (BS), et un ensemble de support dudit miroir secondaire (M2), ledit ensemble de support comprenant un cadre de support (CDRM2) dédié au miroir secondaire (M2) et compris dans un plan sensiblement parallèle au plan du miroir secondaire (M2), et étant muni d'une pluralité de lames de support (LA) reliant le cadre de support (CDRM2) du miroir secondaire (M2) et le miroir secondaire (M2), **caractérisé en ce que** les lames de support (LA) sont inclinées par rapport au plan du cadre de support (CDRM2) du miroir secondaire (M2), et au moins une partie du miroir secondaire (M2) est disposée à l'intérieur du baffle d'entrée (BF), l'inclinaison (α) des lames de support (LA) étant comprise entre 10° et 20°.

2. Engin spatial d'observation selon la revendication 1, dans lequel ladite inclinaison (α) des lames de support (LA) est sensiblement égale à 16°.

3. Engin spatial d'observation selon l'une des revendications 1 à 2, dans lequel lesdites lames de support (LA) comprennent du plastique à renfort fibre de carbone ou un matériau céramique insensible à l'environnement hydrique et quasiment insensible aux variations thermiques.

4. Engin spatial d'observation selon la revendication 3, dans lequel ledit matériau céramique comprend du Nitrure de Silicium.

## Patentansprüche

1. Beobachtungsraumflugkörper, der einen primären Spiegel (M1), einen sekundären Spiegel (M2), eine Eingangsabschirmung (BF), eine Grundplatte (BS) und eine Tragbaugruppe für den sekundären Spiegel (M2) umfasst, wobei die Tragbaugruppe einen für den sekundären Spiegel (M2) dedizierten Tragrahmen (CDRM2) umfasst, der sich in einer Ebene im Wesentlichen parallel zu der Ebene des sekundären Spiegels (M2) befindet und mit mehreren Tragplatten (LA) ausgestattet ist, die den Tragrahmen (CDRM2) des sekundären Spiegels (M2) und den sekundären Spiegel (M2) verbinden, **dadurch gekennzeichnet, dass** die Tragplatten (LA) in Bezug auf die Ebene des Tragrahmens (CDRM2) des sekundären Spiegels (M2) geneigt sind und wenigstens ein Teil des sekundären Spiegels (M2) innerhalb der Eingangsabschirmung (BF) angeordnet ist, wobei die Neigung (α) der Tragplatten (LA) zwischen 10° und 20° liegt.

2. Beobachtungsraumflugkörper nach Anspruch 1, bei dem die Neigung (α) der Tragplatten (LA) im Wesentlichen bei 16° liegt.

3. Beobachtungsraumflugkörper nach einem der Ansprüche 1 bis 2, bei dem die Tragplatten (LA) Plastik mit Verstärkungskohlefasern oder ein keramisches Material umfassen, das für wasserhaltige Umgebungen unempfindlich und für thermische Variationen quasi unempfindlich ist.

4. Beobachtungsraumflugkörper nach Anspruch 3, bei dem das Keramikmaterial Siliciumnitrid umfasst.

## Claims

1. A monitoring spacecraft comprising a primary mirror (M1), a secondary mirror (M2), an entry baffle (BF), a support base (BS) and a support assembly for said secondary mirror (M2), said support assembly comprising a support frame (CDRM2) intended for the secondary mirror (M2) and arranged in a plane substantially parallel to the plane of the secondary mirror (M2) and provided with a plurality of support blades (LA) connecting the support frame (CDRM2) of the secondary mirror (M2) and the secondary mirror (M2), **characterised in that** the support blades (LA) are inclined with respect to the plane of the support frame (CDRM2) of the secondary mirror (M2) and at least part of the secondary mirror (M2) is disposed within the entry baffle (BF), wherein said incline (α) of the support blades (LA) is between 10° and 20°.

2. The monitoring spacecraft according to Claim 1, wherein said incline (α) of the support blades (LA) is substantially equal to 16°.

3. The monitoring spacecraft according to Claim 1 to 2, wherein said support blades (LA) comprise carbon fibre-reinforced plastic or a ceramic material that is insensitive to the hydric environment and more or less insensitive to thermal variations.

4. The monitoring spacecraft according to Claim 3, wherein said ceramic material comprises silicon nitride.
